# EUROPÄISCHE PATENTANMELDUNG

(11) **EP 1 925 473 A2**
(43) Veröffentlichungstag der Anmeldung: **28.05.2008**
(21) Anmeldenummer: 07120059.6
(22) Anmeldetag: 06.11.2007
(51) Int. Cl.: B60G 21/055

(54) **Wankstabilisierungssystem**

(30) Priorität: 22.11.2006 DE 102006054994
(71) Anmelder: ZF Friedrichshafen AG, 88038 Friedrichshafen (DE)
(72) Erfinder: Krimmel, Horst, 88069 Tettnang (DE)

(57) **Zusammenfassung**

Die Erfindung betrifft ein Wankstabilisierungssystem eines Fahrzeugs, mit mehreren aktiven Stabilisatoren (1), wobei vorzugsweise jeder Achse des Fahrzeugs jeweils ein aktiver Stabilisator zugeordnet ist, und wobei jeder aktive Stabilisator (1) einen hydraulischen Schwenkmotor (4) umfasst, an dem mechanische Stabilisatorhälften (2, 3) montiert sind, mit mindestens einem als Pumpe (5) ausgebildeten Aktuator, um die Schwenkmotoren (4) der aktiven Stabilisatoren mit Hydraulikmedium zu versorgen. Erfindungegemäß ist dem Schwenkmotor (4) jedes aktiven Stabilisators (1) jeweils eine reversierend antreibbare Pumpe (5) zugeordnet, wobei der Schwenkmotor (4) und die Pumpe (5) eines jeden aktiven Stabilisators zusammen am jeweiligen aktiven Stabilisator montiert sind.

## Beschreibung

Die Erfindung betrifft ein Wankstabilisierungssystem eines Fahrzeugs nach dem Oberbegriff des Anspruchs 1.

Aus dem Artikel "Das aktive Wank-Stabilisierungssystem Dynamic Drive, Reinhold Jurr et al., ATZ Sonderheft 11/2001, Seite 76 bis 81" ist ein Wankstabilisierungssystem eines Fahrzeugs bekannt, bei welchem die im Bereich einer Vorderachse und Hinterachse vorhandenen, mechanischen Stabilisatoren unter Bildung mechanischer Stabilisatorhälften aufgetrennt sind, und wobei die mechanischen Stabilisatorhälften jeweils über einen hydraulischen Schwenkmotor miteinander verbunden sind. Ein hydraulischer Schwenkmotor mit den an demselben montierten, mechanischen Stabilisatorhälften bildet einen aktiven Stabilisator des Wankstabilisierungssystems, so dass demnach sowohl im Bereich der Vorderachse als auch im Bereich der Hinterachse jeweils ein aktiver Stabilisator aus Schwenkmotor und den am Schwenkmotor montierten, mechanischen Stabilisatorhälften vorhanden ist.

Nach diesem Stand der Technik wirkt mit beiden aktiven Stabilisatoren ein Ventilblock sowie eine Pumpe zusammen, wobei die Pumpe von einem Verbrennungsmotor des Fahrzeugs angetrieben wird und den Schwenkmotor jedes aktiven Stabilisators mit Hydraulikmedium, nämlich Öl, versorgt. In den Ventilblock sind eine Vielzahl von elektrisch ansteuerbaren Ventilen integriert, so unter anderem ein ansteuerbares Proportional-Druckregelventil sowie ein Richtungsventil. Das Richtungsventil ist nach dem Stand der Technik erforderlich, um die Drehrichtung an den Schwenkmotoren der aktiven Stabilisatoren umzukehren. Nach dem Stand der Technik sind die Pumpe, der Ventilblock sowie die aktiven Stabilisatoren im Fahrzeug verteilt angeordnet, wobei die Pumpe mit dem Ventilblock und der Ventilblock mit den aktiven Stabilisatoren über hydraulische Leitungen gekoppelt ist.

Der Stand der Technik erfordert demnach eine aufwendige Verrohrung bzw. Verschlauchung der Baugruppen des Wankstabilisierungssystems, wodurch hohe Kosten verursacht werden. Weiterhin führen hydraulische Verrohrungen im Fahrzeug zu akustischen Problemen im Innenraum des Fahrzeugs, da akustische Verrohrungen Schaltgeräusche von Ventilen in das Innere des Kraftfahrzeugs übertragen.

Hiervon ausgehend liegt der vorliegenden Erfindung das Problem zu Grunde, ein neuartiges Wafikstabilisierungssystem eines Fahrzeugs mit einem vereinfachten Aufbau zu schaffen.

Dieses Problem wird durch ein Wankstabilisierungssystem gemäß Anspruch 1 gelöst.

Erfindungsgemäß ist dem Schwenkmotor jedes aktiven Stabilisators jeweils eine reversierend antreibbare Pumpe zugeordnet, wobei der Schwenkmotor und die Pumpe eines jeden aktiven Stabilisators zusammen am jeweiligen aktiven Stabilisator montiert sind.

Im Sinne der hier vorliegenden Erfindung ist dem Schwenkmotor jedes aktiven Stabilisators jeweils eine reversierend antreibbare Pumpe zugeordnet, wobei Schwenkmotor und Pumpe zusammen am jeweiligen aktiven Stabilisator montiert sind. Hierdurch entfällt eine aufwendige hydraulische Verrohrung bzw. Verschlauchung des Kraftfahrzeugs, da dem Schwenkmotor jedes aktiven Stabilisators eine separate Pumpe zugeordnet ist.

Nach einer vorteilhaften Weiterbildung der Erfindung ist der Pumpe jedes aktiven Stabilisators jeweils ein elektromotorischen Antrieb zugeordnet, der zusammen mit dem Schwenkmotor und der Pumpe am jeweiligen aktiven Stabilisator montiert ist.

Die Pumpe eines jeden aktiven Stabilisators wird demnach von einem eigenen elektromotorischen Antrieb angetrieben. Bedingt dadurch, dass die Pumpe reversierend vom elektromotorischen Antrieb antreibbar ist, sind keine Richtungsänderungsventile mehr erforderlich. Durch eine Drehzahländerung des elektromotorischen Antriebs der jeweiligen Pumpe kann eine Druckregelung erfolgen, so dass auch die nach dem Stand der Technik erforderlichen Proportional-Druckregelventile entfallen können.

Nach einer weiteren vorteilhaften Weiterbildung der Erfindung weist der Schwenkmotor jedes aktiven Stabilisators zwei Hydraulikkammern auf, die jeweils einer der beiden mechanischen Stabilisatorhälften zugeordnet sind, wobei die Hydraulikkammern hydraulisch miteinander verbindbar sind, um bei einer Geradeausfahrt die mechanischen Stabilisatorhälften zu entkoppeln.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisiere Darstellung eines erfindungsgemäßen Wankstabilisierungssystems eines Fahrzeugs nach einem ersten Ausführungsbeispiel der Erfindung; und
- Fig. 2: eine stark schematisiere Darstellung eines erfindungsgemäßen Wankstabilisierungssystems eines Fahrzeugs nach einem ersten Ausführungsbeispiel der Erfindung.

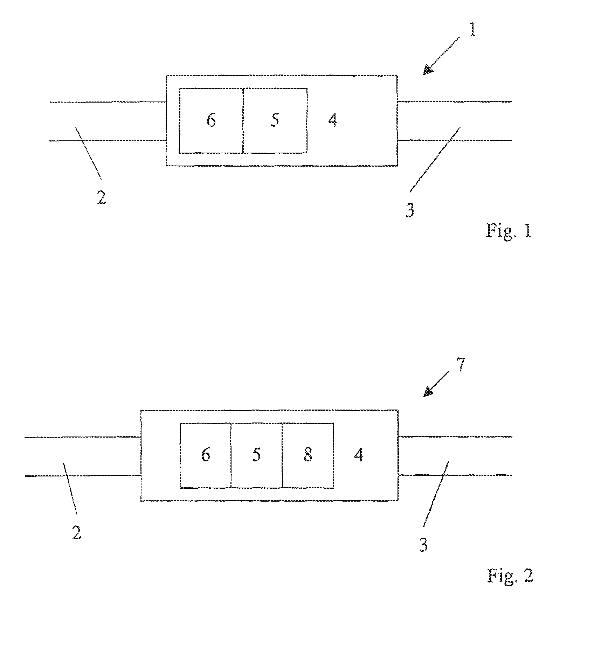

Die hier vorliegende Erfindung betrifft ein Wankstabilisierungssystem eines Fahrzeugs, wie z. B. eines Personenkraftfahrzeugs, mit mehreren aktiven Stabilisatoren, wobei jeder Achse des Fahrzeugs, also sowohl der Vorderachse als auch der Hinterachse desselben, jeweils ein aktiver Stabilisator zugeordnet ist. Fig. 1 und 2 zeigen stark schematisiert erfindungsgemäße Ausgestaltungen aktiver Stabilisatoren eines erfindungsgemäßen Wankstabilisierungssystems.

So zeigt Fig. 1 einen aktiven Stabilisator 1, der zwei mechanische Stabilisatorhälften 2, 3 umfasst, die jeweils an einem Schwenkmotor 4 montiert sind. Bei dem Schwenkmotor 4 handelt es sich um einen hydraulischen Schwenkmotor, der zwei Hydraulikkammern aufweist, wobei mit jeder der beiden Hydraulikkammern des Schwenkmotors 4 auf jeweils eine der beiden mechanischen Stabilisatorhälften 2, 3 ein Torsionsmoment eingeleitet werden kann. Im Sinne der hier vorliegenden Erfindung ist jedem aktiven Stabilisator und damit jedem Schwenkmotor 4 eine reversierend antreibbare Pumpe 5 zugeordnet, wobei Schwenkmotor 4 und Pumpe 5 eines jeden aktiven Stabilisators 1 zusammen am jeweiligen aktiven Stabilisator montiert sind, vorzugsweise an einem Stabilisatorrücken desselben.

Der reversierend antreibbaren Pumpe 5 eines jeden aktiven Stabilisators 1 ist jeweils ein elektromotorischer Antrieb 6 zugeordnet, der die jeweilige Pumpe 5 antreibt und zusammen mit dem Schwenkmotor 4 und der Pumpe 5 am jeweiligen aktiven Stabilisator 1, insbesondere am Stabilisatorrücken desselben, montiert ist.

Über den elektromotorischen Antrieb 6 kann die Pumpe 5 jedes aktiven Stabilisators 1 unabhängig vom Verbrennungsmotor reversierend, d. h. in unterschiedlichen Drehrichtungen, betrieben werden, so dass demnach nach dem Stand der Technik erforderliche Richtungsventile entfallen können. Weiterhin kann über eine Drehzahlanpassung des elektromotorischen Antriebs 6 eine Druckregelung etabliert werden, so dass auf die nach dem Stand der Technik erforderlichen Proportional-Druckregelventile verzichtet werden kann. Jeder aktive Stabilisator 1 stellt eine autarke Einheit dar, so dass ausgehend von jedem aktiven Stabilisator 1 keine hydraulische Verrohrung bzw. Verschlauchung zu anderen Baugruppen des Fahrzeugs erforderlich ist.

Die Pumpe 5 eines jeden aktiven Stabilisators 1 kann entweder als Axialkolbenpumpe oder als Schraubenpumpe ausgeführt sein.

Jedem aktiven Stabilisator 1 ist vorzugsweise eine separate, nicht dargestellte elektronische Steuereinheit zugeordnet, die zusammen mit dem Schwenkmotor 4, der Pumpe 5 und dem elektromotorischen Antrieb 6 am aktiven Stabilisator 1, insbesondere am Stabilisatorrücken desselben, montiert ist. Hierdurch kann eine Verkabelung zwischen der elektronischen Steuerungseinheit und dem elektromotorischen Antrieb entfallen.

Wie bereits ausgeführt, sind der Schwenkmotor 4, die Pumpe 5 sowie der elektromotorische Antrieb 6 für die Pumpe 5 gemeinsam am Stabilisatorrücken des jeweiligen aktiven Stabilisators 1 montiert, und zwar vorzugsweise koaxial, so dass eine Welle des elektromotorischen Antriebs 6, eine Welle des Antriebs 5 sowie die Drehachsen des Schwenkmotors 4 zusammenfallen.

Wie bereits ausgeführt, können zumindest die nach dem Stand der Technik erforderlichen Richtungsventile sowie Proportionai-Druckregelventile entfallen. Im einfachsten Fall der hier vorliegenden Erfindung, der in Fig. 1 dargestellt ist, kann der nach dem Stand der Technik erforderliche, gesamte Ventilblock entfallen.

In dem in Fig. 2 gezeigten Ausführungsbeispiel eines aktiven Stabilisators 7 ist demselben ein Ventilblock 8 zugeordnet, der zwar ein Sicherheitsventil umfasst, jedoch keine Richtungsventile sowie Proportional-Druckregelventile. Demnach kann der Ventilblock 8 zusammen mit dem Schwenkmotor 4 und der Pumpe 5 sowie dem elektromotorischen Antrieb 6 am jeweiligen aktiven Stabilisator 8, insbesondere an dessen Stabilisatorrücken, montiert sein.

Wie bereits ausgeführt, umfasst der Schwenkmotor 4 jedes aktiven Stabilisators zwei Hydraulikkammern. Nach einer vorteilhaften Weiterbildung der hier vorliegenden Erfindung wird vorgeschlagen, bei einer Geradeausfahrt des Fahrzeugs die beiden Hydraulikkammern des Schwenkmotors 4 eines jeden aktiven Stabilisators hydraulisch miteinander zu verbinden, um so bei der Geradeausfahrt die beiden mechanischen Stabilisatorhälften zu entkoppeln. Dies kann durch ein elektrisch ansteuerbares Ventil erfolgen, das einen Bypass zwischen den beiden Hydraulikkammern des jeweiligen Schwenkmotors bereitstellt. Hierdurch kann das sogenannte Kopierverhalten bei Geradeausfahrt des Fahrzeugs verbessert werden.

### Bezugszeichen

- 1: aktiver Stabilisator
- 2: mechanische Stabilisatorhälfte
- 3: mechanische Stabilisatorhälfte
- 4: Schwenkmotor
- 5: Pumpe
- 6: Antrieb
- 7: aktiver Stabilisator
- 8: Ventilblock

## Patentansprüche

1. Wankstabilisierungssystem eines Fahrzeugs, mit mehreren aktiven Stabilisatoren, wobei vorzugsweise jeder Achse des Fahrzeugs jeweils ein aktiver Stabilisator zugeordnet ist, und wobei jeder aktive Stabilisator einen hydraulischen Schwenkmotor umfasst, an dem mechanische Stabilisatorhälften montiert sind, mit mindestens einem als Pumpe ausgebildeten Aktuator, um die Schwenkmotoren der aktiven Stabilisatoren mit Hydraulikmedium zu versorgen, **dadurch gekennzeichnet, dass** dem Schwenkmotor (4) jedes aktiven Stabilisators (1; 8) jeweils eine reversierend antreibbare Pumpe (5) zugeordnet ist, und dass der Schwenkmotor (4) und die Pumpe (5) eines jeden aktiven Stabilisators zusammen am jeweiligen aktiven Stabilisator montiert sind.

2. Wankstabilisierungssystem nach Anspruch 1, **dadurch gekennzeichnet, dass** der Pumpe (5) jedes aktiven Stabilisators (1; 8) jeweils ein elektromotorischen Antrieb (6) zugeordnet ist, der zusammen mit dem Schwenkmotor und der Pumpe am jeweiligen aktiven Stabilisator montiert ist.

3. Wankstabilisierungssystem nach Anspruch 1 oder 2, **dadurch gekennzeichnet, dass** jedem aktiven Stabilisator (7) jeweils ein Ventilbock (8) zugeordnet ist, der mindestens ein Sicherheitsventil umfasst, wobei der Ventilblock zusammen mit dem Schwenkmotor und der Pumpe am jeweiligen aktiven Stabilisator montiert ist.

4. Wankstabilisierungssystem nach einem oder mehreren der Ansprüche 1 bis 3, **dadurch gekennzeichnet, dass** die Pumpe jedes aktiven Stabilisators als Axialkolbenpumpe ausgebildet ist.

5. Wankstabilisierungssystem nach einem oder mehreren der Ansprüche 1 bis 3, **dadurch gekennzeichnet, dass** die Pumpe jedes aktiven Stabilisators als Schraubenpumpe ausgebildet ist.

6. Wankstabilisierungssystem nach einem oder mehreren der Ansprüche 1 bis 5, **dadurch gekennzeichnet, dass** der Schwenkmotor (4) jedes aktiven Stabilisators zwei Hydraulikkammem aufweist, die jeweils einer der beiden mechanischen Stabilisatorhälften (2, 3) zugeordnet sind, wobei die Hydraulikkammern hydraulisch miteinander verbindbar sind, um bei einer Geradeausfahrt die mechanischen Stabilisatorhälften zu entkoppeln.

7. Wankstabilisierungssystem nach einem oder mehreren der Ansprüche 1 bis 6, **dadurch gekennzeichnet, dass** jedem aktiven Stabilisator jeweils eine elektronische Steuerungseinheit zugeordnet ist, die zusammen mit dem Schwenkmotor und der Pumpe am jeweiligen aktiven Stabilisator montiert ist

8. Wankstabilisierungssystem nach einem oder mehreren der Ansprüche 1 bis 7, **dadurch gekennzeichnet, dass** der Schwenkmotor und die Pumpe sowie gegebenenfalls der elektromotorischen Antrieb und der Ventilblock koaxial an einem Stabilisatorrücken des jeweiligen aktiven Stabilisators montiert sind.
